# EUROPEAN PATENT SPECIFICATION

(11) **EP 0 926 542 B1**
(45) Date of publication and mention of the grant of the patent: **26.11.2003**
(21) Application number: 98310651.9
(22) Date of filing: 18.12.1998
(51) Int. Cl.: G03B 21/20, G09F 13/20

(54) **Illuminating apparatus**
Beleuchtungsgerät
Appareil d'éclairage

(30) Priority: 24.12.1997 JP 36647197
(43) Date of publication of application: 30.06.1999
(73) Proprietor: Nakagawa, Toshiaki, Yokohama-shi, Kanagawa-ken (JP)
(72) Inventor: Nakagawa, Toshiaki, Yokohama-shi, Kanagawa-ken (JP)
(74) Representative: Allard, Susan Joyce

(56) References cited:
- EP-A- 0 706 006
- WO-A-89/02637
- WO-A-89/11714
- FR-A- 2 600 451
- GB-A- 2 204 981

## Description

The present invention relates to an illuminating apparatus and, in particular, it relates to an illuminating apparatus for illuminating a color positive film for use in, for example, the fields of advertising signboards and medical diagnosis.

Color positive films have a predetermined size and are made starting with a color negative film made by imaging an object by means of a camera to be used as an original. A color positive film is then made through a conventional process starting from this original. Color positive films are widely used in, for example, advertising signboards and medical diagnosis.

There are, however, some color discrepancies between the final color positive film made by the process and the original object.

For example, in an apparatus for an advertising signboard, where a color positive film used as an advertising signboard display body is disposed before a front opening of a box, and an advertising image in the color positive film is displayed by illuminating the color positive film with light coming from a light source such as, for example, a fluorescent lamp disposed behind it, color discrepancies can arise between the displayed image and the object so that the advertising signboard has a negative effect. In particular, where the object of the image of the advertising display is, for example, perishable food such as, for example, slices of fresh tuna, lobster and crab, the appearance of the freshness of the foods can be affected.

Furthermore, in medical examinations, if the color of blood flow in an affected part is not clearly displayed, for example when the affected part is diagnosed while illuminating a color positive film made by imaging the affected part by means of a gastrocamera, it can cause an erroneous diagnosis.

European Patent Application EP 0706 006 discloses the use of fluorescing materials in a board for displaying optical information. This document does not address the issue of correcting colour discrepancies in colour positive films.

FR 2 600 451 discloses a colour display device using a liquid crystal cell and a fluorescent trichroic screen.

The present invention aims to address at least some of the problems described above and to provide an illuminating apparatus which can correct the colour discrepancies produced in, for example, cases where a colour positive film made as an advertising signboard display body or a medical diagnosis displaying body is illuminated with light, and display it with a clear tone of colour substantially exactly or exactly identical to that of the object.

In order to achieve the above object, the present invention provides an illuminating apparatus comprising:
a fluorescent plate (4) containing fluorescent materials emitting, in use, blue green and red light;
at least one ultraviolet lamp (5) which irradiates, in use, said fluorescent plate (4) with ultraviolet light so that said fluorescent materials emit fluorescence;
characterised in that said illuminating apparatus comprises a colour positive film (3), made from a colour negative film which is made by imaging an object by means of a camera, there being some colour discrepancies between the colour positive film (3) and the object, and in that said colour positive film is irradiated, in use, with white light that results from a combination of said blue, green and red light from said fluorescent plate (4) to thereby correct the colour discrepancies.

The present invention will now be described further, by of example, with reference to the following drawings:-
Fig. 1 is a cross-sectional view of an advertising signboard apparatus, which is an embodiment of the present invention; and
Fig. 2 is a perspective view of a part of an advertising signboard displaying body.

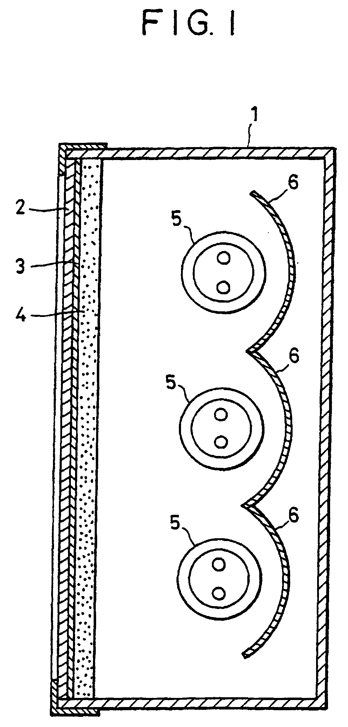

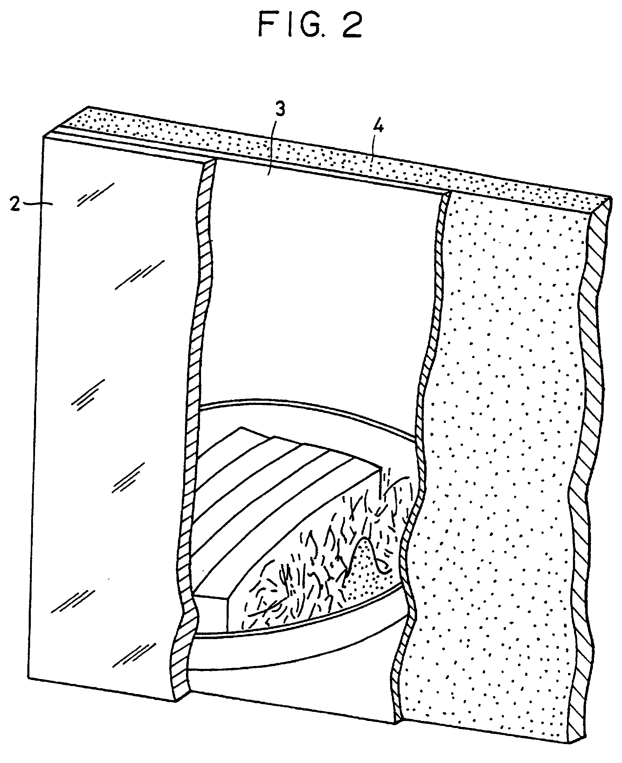

In a preferred mode of realization of the present invention, as indicated in Figs. 1 and 2, a color positive film 3 made as an advertising signboard displaying body is disposed on the rear side of a transparent plate 2 arranged at a front opening portion of a box 1; on the rear side thereof there is disposed a fluorescent plate 4 made of acrylic resin with which fluorescent materials emitting blue, green and red lights are blended; and at least an ultraviolet lamp 5 and a reflecting plate 6 are disposed behind it.

Figs. 1 and 2 show an embodiment, in which an advertising signboard apparatus is illuminated by an illuminating apparatus according to the present invention. In the figure, reference numeral 1 is a box having an opening on the front side; 2 is a transparent plate made of synthetic resin, disposed at the opening portion of the box; 3 is a color positive film for an advertising signboard disposed on the rear side thereof; 4 is a fluorescent plate; 5 is at least an ultraviolet lamp disposed behind it; and 6 is a reflecting plate.

The fluorescent plate 4 is fabricated by blending e.g. acrylic powder resin serving as a coupling agent with blue, green and red light emitting powder fluorescent materials and by forming them in a plate-shape.

As fluorescent materials there are pigments and dyes. However, from the point of view of resistance to climate it is preferable to use pigments.

UV fluorescent lamps, mercury lamps, are lamps, sterilizing lamps, etc. conventionally well-known can be cited as the ultraviolet lamp 5. However, it is preferable to use ultraviolet lamps emitting light having a wavelength in a region near 365 mm, which is suitable for making the fluorescent materials contained in the fluorescent plate emit fluorescence, containing no wavelengths harmful to human eyes.

In the apparatus for an advertising signboard constructed as described above, ultraviolet light emitted by the ultraviolet lamp 5 is projected to the fluorescent plate 4. When the fluorescent materials blended in the fluorescent plate 4 are irradiated with ultraviolet light, blue, green and red lights are emitted simultaneously as fluorescence. According to the color addition principle of the three primary colors, blue, green and red emitted lights form white light, which is projected to the color positive film 3 on the front side of the fluorescent plate 4.

In this case the color positive film 3 itself irradiated with the white light acts as a filter. That is, red light in the white light passes through parts developed in red color, which do not make lights of the other colors, i.e. blue light and green light, pass through. Parts developed in blue color and those developed in green color act analogously.

Owing to the action of the filter, correction of the color discrepancies is effected for the parts developed in red color, those developed in blue color and those developed in green color in the color positive film 3 by fluorescent lights of respective colors passing therethrough. In this way the color positive film is corrected to the same tone of color as the object to be displayed.

In the fluorescent plate 4 acrylic resin is used as a coupling agent for the powder fluorescent materials. Vinyl chloride resin, polyethylene resin, etc. may be used for this coupling agent. Any other material can be arbitrarily selected to be used therefor, if it does not prevent fluorescent light emission of the fluorescent materials.

The same effect can be obtained by using a fluorescent plate, in which matter obtained by blending the fluorescent materials emitting blue, green and red lights with a coupling agent to arrange them is applied on a surface e.g. of an acryl resin plate in a multilayered structure. However the fluorescent plate thus constructed has a drawback that the applied multilayer is easily damaged. On the contrary the fluorescent plate used in the present embodiment is advantageous in that it can be easily fabricated and that it can be obtained at a low cost.

Although the embodiment described above is an example, in which the present invention is realized for illuminating an advertising signboard, since color of blood flow, etc. in an affected part can be clearly displayed by placing a color positive film of the affected part made for medical diagnosis instead of the color positive film made as the signboard displaying body, it is possible to contribute significantly to increase in precision of diagnosis of the affected part on the color positive film.

As explained in the above in detail, according to the present invention, it is possible to provide an illuminating apparatus capable of exhibiting an excellent effect for correcting color discrepancies in a color positive film, etc. made as an advertising signboard displaying body or a medical diagnosis displaying body.

## Claims

1. An illuminating apparatus comprising:
a fluorescent plate (4) containing fluorescent materials emitting, in use, blue green and red light;
at least one ultraviolet lamp (5) which irradiates, in use, said fluorescent plate (4) with ultraviolet light so that said fluorescent materials emit fluorescence;
**characterised in that** said illuminating apparatus comprises a color positive film (3), made from a color negative film which is made by imaging an object by means of a camera, there being some color discrepancies between the color positive film (3) and the object, and **in that** said color positive film is irradiated, in use, with white light that results from a combination of said blue, green and red light from said fluorescent plate (4) to thereby correct the color discrepancies.

2. An illuminating apparatus according to claim 1, wherein said fluorescent plate (4) includes acrylic resin and said fluorescent materials.

3. An illuminating apparatus according to any one of the preceding claims, wherein said fluorescent materials are fluorescent materials of pigments.

4. An illuminating apparatus according to any one of the preceding claims wherein said ultraviolet lamp (5) is one emitting, in use, ultraviolet light having a wavelength in a region near 365 nm.

5. An illuminating apparatus according to claim 3 or claim 4, wherein said fluorescent plate (4) is formed by using acrylic resin as a coupling agent for powder fluorescent materials.

6. An illuminating apparatus according to claim 1, wherein a first side of said color positive film (3) is in surface-to-surface contact with said fluorescent plate (4), said color positive film (3) having a color image for display.

7. An illuminating apparatus according to claim 6, wherein said apparatus includes an outwardly facing transparent plate (2) in surface-to-surface contact with a second opposing side of said color positive film (3).

8. Use of an illuminating apparatus as defined in any one of claims 1 to 7 as an advertising signboard display.

9. Use of an illuminating apparatus as defined in any one of claims 1 to 7 as a medical diagnosis display.

## Patentansprüche

1. Beleuchtungsvorrichtung, umfassend:
eine fluoreszierende Platte (4), die in Gebrauch Blau-, Grün- und Rotlicht emittierende fluoreszente Materialien enthält;
zumindest eine Ultraviolettlampe (5), die im Gebrauch die fluoreszierende Platte (4) mit Ultraviolettlicht derart bestrahlt, dass die fluoreszierenden Materialien Fluoreszenz emittieren;
**dadurch gekennzeichnet, dass** die Beleuchtungsvorrichtung einen Farbpositivfilm (3) aufweist, der aus einem Farbnegativfilm hergestellt ist, der durch Abbilden eines Objekts vermittels einer Kamera hergestellt ist, wobei gewisse Farbdiskrepanzen zwischen dem Farbpositivfilm (3) und dem Objekt vorhanden sind, und dass der Farbpositivfilm im Gebrauch mit Weißlicht bestrahlt wird, das aus einer Kombination des Blau-, Grün- und Rotlichts von der fluoreszierenden Platte (4) resultiert, um hierdurch die Farbdiskrepanzen zu korrigieren.

2. Beleuchtungsvorrichtung nach Anspruch 1, worin die fluoreszierende Platte (4) Acrylharz und die fluoreszierenden Materialien enthält.

3. Beleuchtungsvorrichtung nach einem der vorhergehenden Ansprüche, worin die fluoreszierenden Materialien fluoreszierende Pigmentmaterialien sind.

4. Beleuchtungsvorrichtung nach einem der vorhergehenden Ansprüche, worin die Ultraviolettlampe (5) eine solche ist, die im Gebrauch Ultraviolettlicht mit einer Wellenlänge im Bereich nahe 365 nm emittiert.

5. Beleuchtungsvorrichtung nach Anspruch 3 oder Anspruch 4, worin die fluoreszierende Platte (4) unter Verwendung von Acrylharz als Kopplungsmittel für fluoreszierende Pulvermaterialien gebildet ist.

6. Beleuchtungsvorrichtung nach Anspruch 1, worin eine erste Seite des Farbpositivfilms (3) im Oberfläche-zu-Oberfläche-Kontakt mit der fluoreszierenden Platte (4) steht, wobei der Farbpositivfilm (3) ein Farbbild zur Anzeige aufweist.

7. Beleuchtungsvorrichtung nach Anspruch 6, worin die Vorrichtung eine nach außen weisende transparente Platte (2) in Oberfläche-zu-Oberfläche-Kontakt mit einer zweiten entgegengesetzten Seite des Farbpositivfilms (3) enthält.

8. Verwendung einer Beleuchtungsvorrichtung, wie sie in einem der Ansprüche 1 bis 7 definiert ist, als Werbungsanzeigetafel.

9. Verwendung einer Beleuchtungsvorrichtung, wie sie in einem der Ansprüche 1 bis 7 definiert ist, als medizinische Diagnoseanzeige.

## Revendications

1. Appareil d'éclairage comprenant :
une plaque fluorescente (4) contenant des matières fluorescentes émettant, en fonctionnement, des lumières bleue, verte et rouge ;
au moins une lampe à rayonnement ultraviolet (5) qui irradie, en fonctionnement, ladite plaque fluorescente (4) avec une lumière ultraviolette de sorte que lesdites matières fluorescentes émettent une fluorescence ;
**caractérisé en ce que** ledit appareil d'éclairage comprend un film positif en couleurs (3), fait à partir d'un film négatif en couleurs qui est fabriqué en prenant une image d'un objet au moyen d'un appareil de prise de vues, certaines divergences de couleurs existant entre le film positif en couleurs (3) et l'objet, et **en ce que** ledit film positif en couleurs est irradié, en fonctionnement, par une lumière blanche qui résulte d'une combinaison desdites lumières bleue, verte et rouge en provenance de ladite plaque fluorescente (4) pour corriger de ce fait les divergences de couleurs.

2. Appareil d'éclairage selon la revendication 1, dans lequel ladite plaque fluorescente (4) comprend de la résine acrylique et lesdites matières fluorescentes.

3. Appareil d'éclairage selon l'une quelconque des revendications précédentes, dans lequel lesdites matières fluorescentes sont des matières fluorescentes à pigments.

4. Appareil d'éclairage selon l'une quelconque des revendications précédentes, dans lequel ladite lampe à rayonnement ultraviolet (5) est une lampe émettant, en fonctionnement, une lumière ultraviolette ayant une longueur d'onde dans une gamme proche de 365 nm.

5. Appareil d'éclairage selon la revendication 3 ou la revendication 4, dans lequel ladite plaque fluorescente (4) est formée en utilisant de la résine acrylique en tant qu'agent de couplage pour des matières fluorescentes en poudre.

6. Appareil d'éclairage selon la revendication 1, dans lequel un premier côté dudit film positif en couleurs (3) est en contact surface à surface avec ladite plaque fluorescente (4), ledit film positif en couleurs (3) ayant une image en couleurs pour l'affichage.

7. Appareil d'éclairage selon la revendication 6, dans lequel ledit appareil comprend une plaque transparente (2) faisant face vers l'extérieur en contact surface à surface avec un second côté opposé dudit film positif en couleurs (3).

8. Utilisation d'un appareil d'éclairage selon l'une quelconque des revendications 1 à 7 en tant que dispositif d'affichage d'enseigne publicitaire.

9. Utilisation d'un appareil d'éclairage selon l'une quelconque des revendications 1 à 7 en tant que dispositif d'affichage de diagnostic médical.
